# EUROPEAN PATENT APPLICATION

(11) **EP 4 697 435 A1**
(43) Date of publication of application: **18.02.2026**
(21) Application number: 24788613.8
(22) Date of filing: 01.04.2024
(51) Int. Cl.: H01M 10/0587, H01M 4/13, H01M 10/04

(54) **SECONDARY BATTERY**

(30) Priority: 10.04.2023 JP 2023063607
(71) Applicant: PANASONIC INTELLECTUAL PROPERTY MANAGEMENT CO., LTD., Kadoma-shi, Osaka 571-0057 (JP)
(72) Inventor: KATO, Keiko, Kadoma-shi, Osaka 571-0057 (JP); FURUSAWA, Daisuke, Kadoma-shi, Osaka 571-0057 (JP); ISHIBASHI, Tatsuya, Kadoma-shi, Osaka 571-0057 (JP)
(74) Representative: Novagraaf International SA
(86) International application number: PCT/JP2024/013462
(87) International publication number: WO 2024/214586

(57) **Abstract**

Provided is a secondary battery with which electrode plate deformation caused by charging and discharging can be suppressed.

This secondary battery has an electrode body in which a positive electrode (11) and a negative electrode (12) having a negative electrode mixture layer (50) disposed on a negative electrode core body (48) are wound with a separator interposed therebetween. The secondary battery is characterized in that: the negative electrode (12) has, at a winding start-side end, an outer peripheral-side non-facing section (44) and an inner peripheral-side non-facing section (46) that do not face the positive electrode (11), with the separator interposed therebetween, and has a first insulating tape (52a) disposed on the outer peripheral-side non-facing section (44) and a second insulating tape (52b) disposed on the inner peripheral-side non-facing section (46); the first insulating tape (52a) is disposed on the outer peripheral-side non-facing section (44) over 1.5 or more turns in the circumferential direction of the outer peripheral-side non-facing section (44); and the second insulating tape (52b) is disposed on the inner peripheral-side non-facing section (46) over 0.9 or more turns in the circumferential direction of the inner peripheral-side non-facing section (46).

## Description

### TECHNICAL FIELD

The present disclosure relates to a secondary battery.

### BACKGROUND

Secondary batteries such as lithium-ion secondary batteries have been used as power sources for a wide range of devices including electric vehicles, and a further increase in capacity has been required. By the way, in a secondary battery including a wound electrode assembly in which a positive electrode and a negative electrode are wound with a separator interposed therebetween, stress is locally applied in the electrode assembly when the electrode assembly expands caused by charging and discharging, and there is a possibility that electrode plate deformation occurs in which at least one of the positive electrode and the negative electrode is deformed. In particular, local stress is likely to be applied at a center (winding core) of the electrode assembly, so that the electrode plate deformation is likely to occur at a winding start-side end of the electrode.

For example, Patent Literature 1 discloses a non-aqueous electrolyte secondary battery including a wound electrode assembly in which a positive electrode and a negative electrode in which a negative electrode active material layer is formed on a surface of a belt-shaped negative electrode collector are wound in a spiral shape with a separator interposed therebetween, in which the negative electrode includes a negative electrode lead bonded to a winding start-side end of the negative electrode collector, is wound at least one turn from a winding-direction inner end in the state of not facing the positive electrode across the separator, and includes an insulating tape adhering to the negative electrode collector so as to straddle a surface of the negative electrode lead in a winding direction. According to Patent Literature 1, the insulating tape adheres to the negative electrode collector so as to straddle the surface of the negative electrode lead, whereby electrode plate deformation caused by charging and discharging can be suppressed.

### CITATION LIST

### PATENT LITERATURE

Patent Literature 1: WO 2018/180748 A

### SUMMARY

However, in the related art, the electrode plate deformation sometimes occurs depending on charging and discharging conditions, and there is room for improvement. Note that there is a possibility that the electrode plate deformation leads to self-discharge due to an internal short circuit of a battery, and thus it is important to suppress the electrode plate deformation.

Therefore, an object of the present disclosure is to provide a secondary battery with which electrode plate deformation caused by charging and discharging can be suppressed.

The present disclosure relates to a secondary battery including an electrode assembly in which a positive electrode and a negative electrode having a negative electrode mixture layer disposed on a negative electrode core are wound with a separator interposed therebetween, in which the negative electrode has, at a winding start-side end, an outer peripheral-side non-facing section and an inner peripheral-side non-facing section that do not face the positive electrode across the separator, and has a first insulating tape disposed on the outer peripheral-side non-facing section and a second insulating tape disposed on the inner peripheral-side non-facing section, the first insulating tape is disposed on the outer peripheral-side non-facing section over greater than or equal to 1.5 turns in the circumferential direction of the outer peripheral-side non-facing section, and the second insulating tape is disposed on the inner peripheral-side non-facing section over greater than or equal to 0.9 turns in the circumferential direction of the inner peripheral-side non-facing section.

According to the present disclosure, it is possible to provide the secondary battery with which the electrode plate deformation caused by charging and discharging can be suppressed.

### BRIEF DESCRIPTION OF DRAWINGS

FIG. 1 is a schematic cross-sectional view of a secondary battery according to an example of an embodiment.
FIG. 2 is a view schematically illustrating a portion on an inner end side in a winding direction of an electrode assembly in a cross section taken along line A-A of FIG. 1.
FIG. 3 is a schematic cross-sectional view illustrating a state on a winding start end side of a negative electrode and a positive electrode before winding.
FIG. 4 is a schematic cross-sectional view illustrating an example of a configuration of an insulating tape.
FIG. 5 is a schematic cross-sectional view illustrating a state on a winding start end side of a negative electrode and a positive electrode before winding in Example 1.
FIG. 6 is a schematic cross-sectional view illustrating a state on a winding start end side of a negative electrode and a positive electrode before winding in Example 2.
FIG. 7 is a schematic cross-sectional view illustrating a state on a winding start end side of a negative electrode and a positive electrode before winding in Example 3.
FIG. 8 is a schematic cross-sectional view illustrating a state on a winding start end side of a negative electrode and a positive electrode before winding in Comparative Example 1.
FIG. 9 is a schematic cross-sectional view illustrating a state on a winding start end side of a negative electrode and a positive electrode before winding in Comparative Example 2.
FIG. 10 is a schematic cross-sectional view illustrating a state on a winding start end side of a negative electrode and a positive electrode before winding in Comparative Example 3.
FIG. 11 is a schematic cross-sectional view illustrating a state on a winding start end side of a negative electrode and a positive electrode before winding in Comparative Example 4.

### DESCRIPTION OF EMBODIMENTS

Hereinafter, an example of an embodiment of a secondary battery according to the present disclosure will be described in detail.

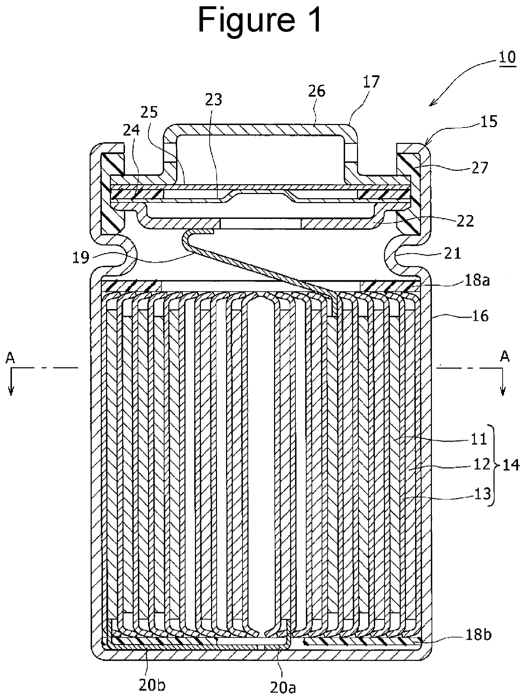

FIG. 1 is a schematic cross-sectional view of a secondary battery according to the example of the embodiment. A secondary battery 10 illustrated in FIG. 1 includes a wound electrode assembly 14 in which a positive electrode 11 and a negative electrode 12 are wound with a separator 13 interposed therebetween, a non-aqueous electrolyte, insulating plates 18a and 18b disposed on and under the electrode assembly 14, respectively, and a battery case 15 as an exterior body. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called laminate-type case) formed by laminating a resin sheet.

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as LiPF₆ is used.

In addition, as the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. Note that the non-aqueous electrolyte is an example, and may be an aqueous electrolyte as long as it is applicable.

The case body 16 is, for example, a bottomed cylindrical metal container. A gasket 27 is provided between the case body 16 and the sealing assembly 17 to ensure airtightness within the battery. The case body 16 has a projecting portion 21 in which, for example, a part of the side surface thereof projects inward to support the sealing assembly 17. The projecting portion 21 is preferably formed in an annular shape in the circumferential direction of the case body 16, and supports the sealing assembly 17 on the upper surface thereof.

The sealing assembly 17 has a structure in which a filter 22, a lower vent member 23, an insulator 24, an upper vent member 25, and a cap 26 are stacked sequentially from the electrode assembly 14 side. Each of the members forming the sealing assembly 17 has, for example, a disk shape or a ring shape, and the members excluding the insulator 24 are electrically connected to each other. The lower vent member 23 and the upper vent member 25 are connected to each other at their centers, and the insulator 24 is interposed between their peripheral edges. When the internal pressure of the secondary battery 10 increases due to heat generated by an internal short circuit or the like, for example, the lower vent member 23 deforms so as to push the upper vent member 25 up toward the cap 26 side and breaks, so that a current path between the lower vent member 23 and the upper vent member 25 is cut off. When the internal pressure further increases, the upper vent member 25 breaks, and gas is discharged from an opening of the cap 26.

In the secondary battery 10 illustrated in FIG. 1, a positive electrode lead 19 attached to the positive electrode 11 extends to the sealing assembly 17 side through a through hole of the insulating plate 18a, and is connected to a lower surface of the filter 22 which is a bottom plate of the sealing assembly 17 by welding or the like. As a result, the cap 26, which is the a plate of the sealing assembly 17 electrically connected to the filter 22, serves as a positive electrode terminal. In addition, in the secondary battery 10 illustrated in FIG. 1, a negative electrode lead 20a connected to a winding start-side end of the negative electrode 12 and a negative electrode lead 20b connected to a winding end-side end of the negative electrode 12 extend to a bottom side of the case body 16 through the insulating plate 18b, and are connected to a bottom inner surface of the case body 16 by welding or the like. As a result, the case body 16 serves as a negative electrode terminal.

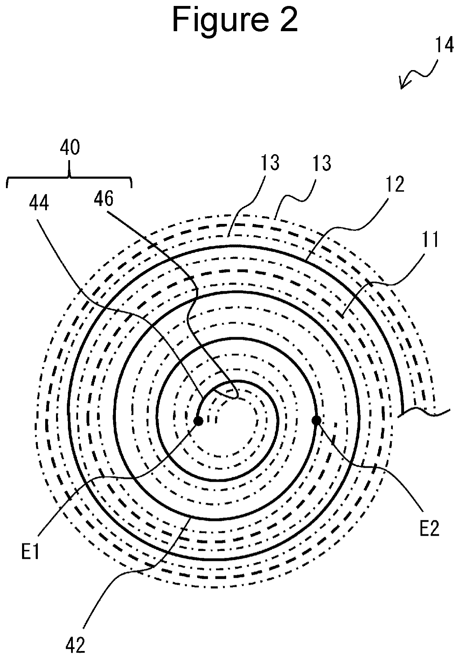

FIG. 2 is a schematic view illustrating an inner end side in a winding direction of the electrode assembly in a cross section taken along line A-A of FIG. 1. In FIG. 2, in order to make an arrangement relationship easy to understand, the negative electrode 12 is indicated by a solid line, the positive electrode 11 is indicated by a broken line, and the separator 13 is indicated by a one-dot chain line. In addition, in FIG. 2, gaps among the positive electrode 11, the negative electrode 12, and the separator 13 are exaggerated.
The electrode assembly 14 is formed by winding the positive electrode 11 and the negative electrode 12 with the separator 13 interposed therebetween. Specifically, the belt-shaped positive electrode 11, the belt-shaped negative electrode 12, and the pair of belt-shaped separators 13 are laminated in an order of one separator 13, the positive electrode 11, the other separator 13, and the negative electrode 12, and then this laminate is spirally wound to produce the electrode assembly 14. In the electrode assembly 14, a longitudinal direction of each electrode is the winding direction, and a width direction of each electrode is a winding axis direction.

As illustrated in FIG. 2, the negative electrode 12 has a non-facing section 40 constituted by an outer peripheral-side non-facing section 44 and an inner peripheral-side non-facing section 46 that do not face the positive electrode 11 across the separator 13 on a winding start end side. In addition, the negative electrode 12 has an insulating tape to be described later. Although the insulating tape is not illustrated in FIG. 2, the insulating tape is disposed on the outer peripheral-side non-facing section 44 and the inner peripheral-side non-facing section 46. In addition, the negative electrode 12 has a facing section 42 facing the positive electrode 11 across the separator 13. The facing section 42 is wound following the non-facing section 40.

The non-facing section 40 includes the outer peripheral-side non-facing section 44 and the inner peripheral-side non-facing section 46. Note that the outer peripheral-side non-facing section 44 is a non-facing section located on the radially outer side of the wound negative electrode 12, and the inner peripheral-side non-facing section 46 is a non-facing section located on the radially inner side of the wound negative electrode 12. The non-facing section 40 (the outer peripheral-side non-facing section 44 and the inner peripheral-side non-facing section 46) illustrated in FIG. 2 is wound 1.5 turns from a winding start end (a point E1 in FIG. 2) of the negative electrode 12. That is, the non-facing section 40 (the outer peripheral-side non-facing section 44 and the inner peripheral-side non-facing section 46) extends from the point E1 illustrated in FIG. 2 to a point E2 along the winding direction. The number of turns of the non-facing section 40 (the outer peripheral-side non-facing section 44 and the inner peripheral-side non-facing section 46) is, for example, greater than or equal to 1.5 turns, and preferably greater than or equal to 1.5 turns and less than or equal to 3 turns.

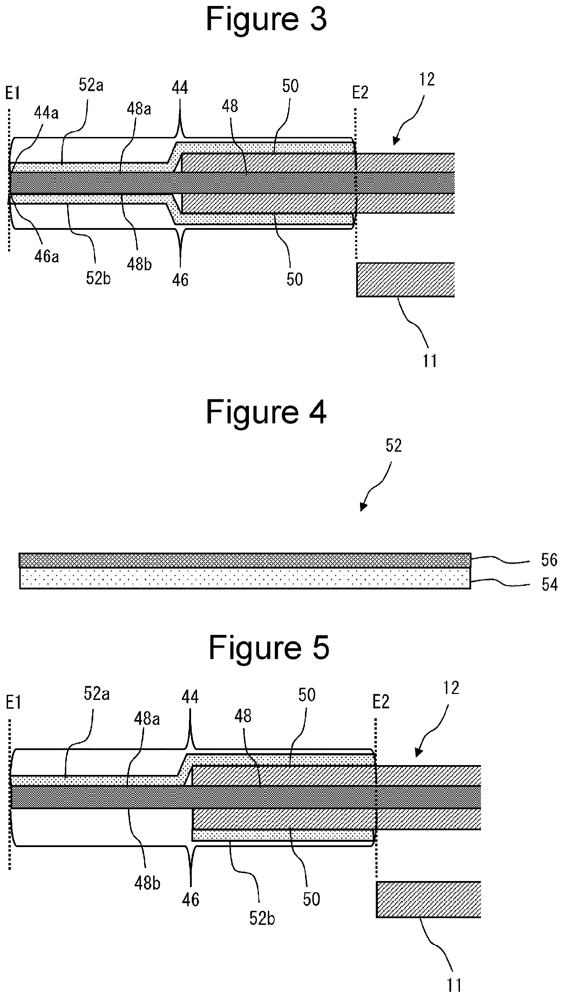

FIG. 3 is a schematic cross-sectional view illustrating a state on a winding start end side of a negative electrode and a positive electrode before winding. As illustrated in FIG. 3, the negative electrode 12 includes a negative electrode core 48 and a negative electrode mixture layer 50 disposed on the negative electrode core 48. The negative electrode mixture layer 50 may be formed only on one surface of the negative electrode core 48 or may be formed on both surfaces of the negative electrode core 48. In the negative electrode 12 illustrated in FIG. 3, the outer peripheral-side non-facing section 44 includes the negative electrode mixture layer 50 disposed on the negative electrode core 48 and an outer peripheral-side exposed portion 48a where the negative electrode mixture layer 50 is not disposed on the negative electrode core 48, but is not limited to this configuration, and may be configured using, for example, the negative electrode mixture layer 50 disposed on the negative electrode core 48 or may be configured using the outer peripheral-side exposed portion 48a where the negative electrode mixture layer 50 is not disposed on the negative electrode core 48. Similarly, the inner peripheral-side non-facing section 46 is not limited to the case of including the negative electrode mixture layer 50 disposed on the negative electrode core 48 and an inner peripheral-side exposed portion 48b where the negative electrode mixture layer 50 is not disposed on the negative electrode core 48, and may be configured using the inner peripheral-side exposed portion 48b where the negative electrode mixture layer 50 is not disposed on the negative electrode core 48 or may be configured using the negative electrode mixture layer 50 disposed on the negative electrode core 48.

The negative electrode 12 includes a first insulating tape 52a disposed on the outer peripheral-side non-facing section 44 and a second insulating tape 52b disposed on the inner peripheral-side non-facing section 46. The first insulating tape 52a illustrated in FIG. 3 is disposed on the negative electrode mixture layer 50 and the outer peripheral-side exposed portion 48a in the outer peripheral-side non-facing section 44. Note that the first insulating tape 52a may be disposed entirely or partially on the negative electrode mixture layer 50 in the outer peripheral-side non-facing section 44, or entirely or partially on the outer peripheral-side exposed portion 48a. In addition, the second insulating tape 52b illustrated in FIG. 3 is disposed on the negative electrode mixture layer 50 and the inner peripheral-side exposed portion 48b in the inner peripheral-side non-facing section 46. Note that the second insulating tape 52b may be disposed entirely or partially on the negative electrode mixture layer 50 in the inner peripheral-side non-facing section 46, or entirely or partially on the inner peripheral-side exposed portion 48b.

The first insulating tape 52a is disposed on the outer peripheral-side non-facing section 44 over greater than or equal to 1.5 turns in the circumferential direction (that is, the winding direction of the negative electrode 12) of the outer peripheral-side non-facing section 44 when the negative electrode 12 is wound. In addition, the second insulating tape 52b is disposed on the inner peripheral-side non-facing section 46 over greater than or equal to 0.9 turns in the circumferential direction (that is, the winding direction of the negative electrode 12) of the inner peripheral-side non-facing section 46 when the negative electrode 12 is wound. Since the first insulating tape 52a is disposed over greater than or equal to 1.5 turns in the circumferential direction on the outer peripheral-side non-facing section 44 and the second insulating tape 52b is disposed over greater than or equal to 0.9 turns in the circumferential direction on the outer peripheral-side non-facing section 44 as described above, for example, the winding start end side of the negative electrode 12 is reinforced, or when local stress is applied to the center of the electrode assembly, the negative electrode 12 on the winding start end side slides to alleviate the stress applied to the electrode, whereby electrode plate deformation caused by charging and discharging of the battery is suppressed.

The first insulating tape 52a only needs to be disposed on the outer peripheral-side non-facing section 44 over greater than or equal to 1.5 turns in the circumferential direction of the outer peripheral-side non-facing section 44 from the viewpoint of suppressing the electrode plate deformation caused by charging and discharging, but is preferably disposed on the outer peripheral-side non-facing section 44 over greater than or equal to 1.5 turns and less than or equal to 3 turns.

For example, the first insulating tape 52a may be disposed on the negative electrode mixture layer 50 in the outer peripheral-side non-facing section 44, may be disposed on the outer peripheral-side exposed portion 48a in the outer peripheral-side non-facing section 44, or may be disposed on both the outer peripheral-side exposed portion 48a and the negative electrode mixture layer 50 in the outer peripheral-side non-facing section 44 as illustrated in FIG. 3 from the viewpoint of suppressing the electrode plate deformation caused by charging and discharging.

In addition, when the first insulating tape 52a is disposed at least on the negative electrode mixture layer 50, for example, the first insulating tape 52a preferably overlaps the negative electrode mixture layer 50 in the outer peripheral-side non-facing section 44 at an area ratio of greater than or equal to 80% and less than or equal to 100% from the viewpoint of suppressing the electrode plate deformation caused by charging and discharging.

The first insulating tape 52a is preferably disposed on the outer peripheral-side non-facing section 44 from a circumferential inner edge 44a of the outer peripheral-side non-facing section 44 as illustrated in FIG. 3, for example, from the viewpoint of suppressing the electrode plate deformation caused by charging and discharging. Note that the first insulating tape 52a may protrude from the outer peripheral-side non-facing section 44 and be disposed on the facing section on the outer peripheral side, but is desirably not disposed on the facing section on the outer peripheral side from the viewpoint of battery capacity and the like, for example.

The second insulating tape 52b only needs to be disposed on the inner peripheral-side non-facing section 46 over greater than or equal to 0.9 turns in the circumferential direction of the inner peripheral-side non-facing section 46 from the viewpoint of suppressing the electrode plate deformation caused by charging and discharging, but preferably overlaps the inner peripheral-side non-facing section 46 at an area ratio of greater than or equal to 50% and less than or equal to 100%.

For example, the second insulating tape 52b may be disposed on the negative electrode mixture layer 50 in the inner peripheral-side non-facing section 46, may be disposed on the inner peripheral-side exposed portion 48b in the inner peripheral-side non-facing section 46, or may be disposed on both the inner peripheral-side exposed portion 48b and the negative electrode mixture layer 50 in the inner peripheral-side non-facing section 46 from the viewpoint of suppressing the electrode plate deformation caused by charging and discharging as illustrated in FIG. 3.

The second insulating tape 52b is preferably disposed on the inner peripheral-side non-facing section 46 from a circumferential inner edge 46a of the inner peripheral-side non-facing section 46 as illustrated in FIG. 3, for example, from the viewpoint of suppressing the electrode plate deformation caused by charging and discharging. Note that the second insulating tape 52b may protrude from the inner peripheral-side non-facing section 46 and be disposed on the facing section on the inner peripheral side, but is desirably not disposed on the facing section on the inner peripheral side from the viewpoints of the battery capacity and the like, for example.

FIG. 4 is a schematic cross-sectional view illustrating an example of a configuration of an insulating tape. An insulating tape 52 described hereinafter is applied to the first insulating tape 52a and the second insulating tape 52b described above. The insulating tape 52 includes, for example, a base material layer 54 and an adhesive layer 56. The insulating tape 52 has a laminated structure in which the adhesive layer 56 and the base material layer 54 are laminated in this order from the non-facing section side. The thickness of the insulating tape 52 is preferably, for example, greater than or equal to 0.02 mm and less than or equal to 0.1 mm from the viewpoints of flexibility, strength, and the like.

The base material layer 54 preferably contains a resin, for example, from the viewpoints of insulation property, electrolytic solution resistance, heat resistance, strength, and the like. The content of the resin may be, for example, greater than or equal to 90 mass%, greater than or equal to 95 mass%, or 100 mass% with respect to the total mass of the base material layer 54. Examples of the resin include polyolefin (for example, polyethylene, polypropylene, and the like), polystyrene, polyester (for example, polyethylene terephthalate and the like), polyimide, polyamide, polyamideimide, polycarbonate, and polyphenylene sulfide. Among these resins, one type may be used alone, or two or more types may be used in combination. Among these resins, polypropylene is preferable, for example, in that the flexibility of the insulating tape 52 can be enhanced. The content of polypropylene may be, for example, greater than or equal to 50 mass%, greater than or equal to 80 mass%, or 100 mass% with respect to the total mass of the resin contained in the base material layer 54.

The adhesive layer 56 is a layer for mainly imparting adhesiveness with respect to the negative electrode 12 to the insulating tape 52. The adhesive layer 56 is formed by applying an adhesive on one surface of the base material layer 54. The adhesive constituting the adhesive layer 56 may be a hot melt type that becomes sticky by heating or a thermosetting type that cures by heating, but an adhesive having stickiness at room temperature is preferable from the viewpoints of productivity and the like. Examples of the adhesive include an acrylic adhesive and a synthetic rubber adhesive.

The insulating tape 52 is not limited to the form illustrated in FIG. 4, and may have, for example, a form having an inorganic particle-containing layer between the base material layer 54 and the adhesive layer 56. The inorganic particle-containing layer has, for example, a structure in which inorganic particles are dispersed in a resin matrix forming the layer. The inorganic particle-containing layer is formed, for example, by applying a resin solution containing the inorganic particles onto one surface of the base material layer 54. Examples of the inorganic particles include metal oxide particles, metal nitride particles, metal fluoride particles, and metal carbide particles. Examples of the resin matrix include an acrylic resin, a urethane resin, and elastomers thereof.

As the negative electrode core 48 constituting the negative electrode 12, a foil of a metal that is stable in a potential range of the negative electrode, such as copper or a copper alloy, a film in which the metal is disposed on a surface layer thereof, or the like can be used. The thickness of the negative electrode core 48 is, for example, greater than or equal to 7 µm and less than or equal to 50 µm.

In addition, the negative electrode mixture layer 50 constituting the negative electrode 12 contains, for example, a negative electrode active material, a binder, and the like. The thickness of the negative electrode mixture layer 50 is, for example, in a range of greater than or equal to 10 µm and less than or equal to 100 µm. The negative electrode mixture layer 50 can be produced, for example, by applying a negative electrode mixture slurry containing the negative electrode active material, the binder, and the like onto the negative electrode core 48, drying a coating film, and then rolling the coating film.

The negative electrode active material contained in the negative electrode mixture layer 50 is not particularly limited, for example, as long as it can reversibly store and release lithium ions, and examples thereof include a carbon material and a Si-based material. The negative electrode active material preferably contains a Si-based material from the viewpoint of increasing the capacity of the battery.

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material is not particularly limited as long as it can reversibly occlude and release ions such as lithium ions, and examples of the Si-based material include Si particles, alloy particles containing Si, and Si compound particles. Among them, the Si compound particles are preferable.

Examples of the Si compound particles include Si compound particles having a silicate phase and Si particles dispersed in the silicate phase, Si compound particles having a silicon oxide phase and Si particles dispersed in the silicon oxide phase, and Si compound particles having a carbon phase and Si particles dispersed in the carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among them, a silicate phase containing lithium (hereinafter, may be referred to as a lithium silicate phase) is preferable from the viewpoints of high lithium ion conductivity and the like.

The lithium silicate phase is represented by, for example, a formula: Li_{2z}SiO_{2+z} (0 < z < 2). From the viewpoints of stability, ease of production, lithium ion conductivity, and the like, z preferably satisfies the relation of 0 < z < 1, and more preferably z = 1/2.

The Si compound particles in which the Si particles are dispersed in the silicon oxide phase are represented by, for example, a general formula SiOₓ (in which x is preferably in the range of 0 < x < 2, and more preferably in the range of 0.5 ≤ x ≤ 1.6). The Si compound particles in which the Si particles are dispersed in the carbon phase are represented by, for example, a general formula SixC1y (in which x and y are preferably in the ranges of 0 < x ≤ 1 and 0 < y ≤ 1, and more preferably in the ranges of 0.3 ≤ x ≤ 0.45 and 0.7 ≤ y ≤ 0.55).

The Si-based material preferably has a particle surface on which a conductive film containing a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. In addition, the conductive film may also be formed by fixing a conductive filler such as carbon black to the particle surface of the Si-based material using a binder.

The content of the Si-based material is, for example, preferably greater than or equal to 5 mass% with respect to the total mass of the negative electrode mixture layer 50 from the viewpoint of increasing the capacity of the battery.

The negative electrode active material may contain, in addition to the carbon material and the Si-based material, for example, other materials capable of reversibly storing and releasing lithium ions. Examples of the other materials include Sn, alloys containing Sn, Sn-based materials such as tin oxide, and Ti-based materials such as lithium titanate.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

The positive electrode 11 includes a positive electrode core and a positive electrode mixture layer formed on a surface of the positive electrode core. The positive electrode mixture layer is preferably formed on both surfaces of the positive electrode core. As the positive electrode core, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binder, a conductive agent, and the like. The positive electrode mixture layer can be produced, for example, by applying a positive electrode mixture slurry containing the positive electrode active material, the binder, the conductive agent, and the like onto the positive electrode core, drying a coating film, and then rolling the coating film.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). Among them, one type may be used alone, or a plurality of types may be used in combination. From the viewpoint that a high capacity of the battery can be achieved, it is desirable that the positive electrode active material contain a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. The binder contained in the positive electrode mixture layer may be the same as that in the negative electrode 12.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. In addition, a multi-layer separator including a polyethylene layer and a polypropylene layer may be used, and the separator 13 whose surface is coated with a material such as an aramid-based resin or ceramic may be used.

### EXAMPLES

The present disclosure will be further described below with reference to Examples. However, the present disclosure is not limited to these Examples.

### <Example 1>

### [Production of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVDF), and adding an appropriate amount of N-methyl-2-pyrrolidone (NMP). Next, the positive electrode mixture slurry was applied to both surfaces of an aluminum foil having a thickness of 15 µm, and a coating film was dried. Then, the coating film was rolled using a roller and then cut into a predetermined electrode size to produce a positive electrode having a positive electrode mixture layer formed on both surfaces of a positive electrode core. An exposed portion where the positive electrode mixture layer was not disposed on the positive electrode core was provided at a center of the positive electrode in the longitudinal direction, and an aluminum positive electrode lead was welded to the exposed portion.

### [Production of Negative Electrode]

A negative electrode mixture slurry was prepared by mixing 92 parts by mass of graphite powder, 6 parts by mass of a Si-based material, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied to both surfaces of a copper foil having a thickness of 8 µm, and a coating film was dried. Then, the coating film was rolled using a roller and then cut into a predetermined electrode size to produce a negative electrode having a negative electrode mixture layer formed on both surfaces of a negative electrode core. An exposed portion where the negative electrode mixture layer was not disposed on the negative electrode core was provided at both ends in the longitudinal direction of both surfaces of the negative electrode, and a negative electrode lead made of nickel was welded to each of the exposed portions at both the ends. In addition, an insulating tape was disposed at an end on a winding start side among both the ends of the negative electrode in the longitudinal direction. As the insulating tape, a tape in which an acrylic adhesive was coated on a polypropylene base material was used. Hereinafter, an arrangement position of the insulating tape in Example 1 will be described.

FIG. 5 is a schematic cross-sectional view illustrating a state on a winding start end side of a negative electrode and a positive electrode before winding in Example 1. In Example 1, the first insulating tape 52a was disposed on the outer peripheral-side exposed portion 48a and the negative electrode mixture layer 50 in the outer peripheral-side non-facing section 44 of the negative electrode 12, and the second insulating tape 52b was disposed on the negative electrode mixture layer 50 in the inner peripheral-side non-facing section 46 of the negative electrode 12. The first insulating tape 52a disposed on the outer peripheral-side non-facing section 44 is disposed over 2.1 turns in the circumferential direction of the outer peripheral-side non-facing section 44 when the negative electrode 12 is wound (the number of turns of the disposed insulating tape: 2.1 turns). In addition, the first insulating tape 52a disposed on the outer peripheral-side non-facing section 44 overlaps the outer peripheral-side exposed portion 48a in the outer peripheral-side non-facing section 44 at an area ratio of 100%, and overlaps the negative electrode mixture layer 50 in the outer peripheral-side non-facing section 44 at an area ratio of 94%. On the other hand, the second insulating tape 52b disposed on the inner peripheral-side non-facing section 46 of the negative electrode 12 is disposed over 0.9 turns in the circumferential direction of the inner peripheral-side non-facing section 46 when the negative electrode 12 is wound (the number of turns of the disposed insulating tape: 0.9 turns). In addition, the second insulating tape 52b disposed on the inner peripheral-side non-facing section 46 overlaps the inner peripheral-side non-facing section 46 at an area ratio of 50%, and overlaps the inner peripheral-side exposed portion 48b in the inner peripheral-side non-facing section 46 at an area ratio of 0%.

### [Preparation of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Production of Non-Aqueous Electrolyte Secondary Battery]

A wound electrode assembly was produced by spirally winding the above positive electrode and negative electrode with a separator interposed therebetween. Insulating plates were respectively disposed above and below the electrode assembly, and the electrode assembly was housed in a case body. The negative electrode lead was welded to a bottom of the case body, and the positive electrode lead was welded to a sealing assembly. After the non-aqueous electrolyte was injected into the case body, an opening of the case body was sealed with the sealing assembly via a gasket to produce a non-aqueous electrolyte secondary battery.

### <Example 2>

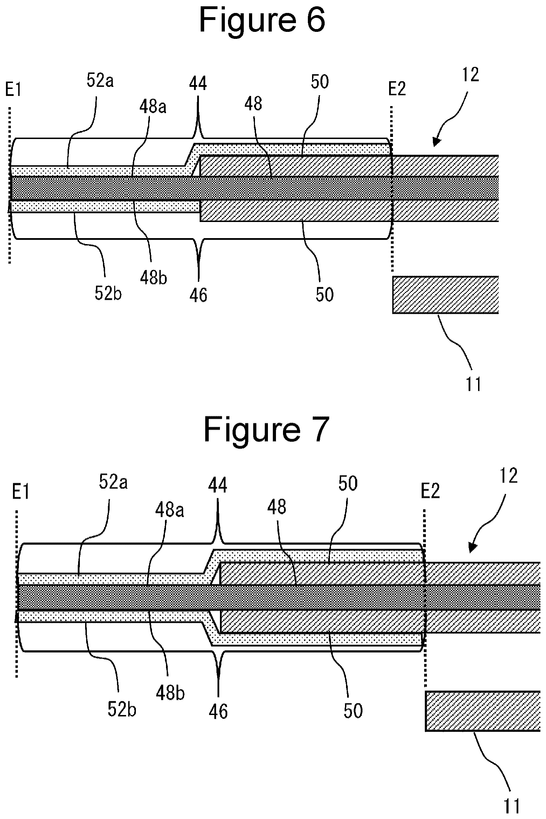

FIG. 6 is a schematic cross-sectional view illustrating a state on a winding start end side of a negative electrode and a positive electrode before winding in Example 2. In Example 2, the first insulating tape 52a was disposed on the outer peripheral-side exposed portion 48a and the negative electrode mixture layer 50 in the outer peripheral-side non-facing section 44 of the negative electrode 12, and the second insulating tape 52b was disposed on the inner peripheral-side exposed portion 48b in the inner peripheral-side non-facing section 46 of the negative electrode 12. A state where the first insulating tape 52a is disposed on the outer peripheral-side non-facing section 44 is similar to that in Example 1. On the other hand, the second insulating tape 52b disposed on the inner peripheral-side non-facing section 46 of the negative electrode 12 is disposed over 1.2 turns in the circumferential direction of the inner peripheral-side non-facing section 46 when the negative electrode 12 is wound (the number of turns of the disposed insulating tape: 1.2 turns). In addition, the second insulating tape 52b disposed on the inner peripheral-side non-facing section 46 overlaps the inner peripheral-side non-facing section 46 at an area ratio of 53%, and overlaps the inner peripheral-side exposed portion 48b in the inner peripheral-side non-facing section 46 at an area ratio of 100%. A non-aqueous electrolyte secondary battery was produced in the same manner as in Example 1 except that the above negative electrode was used.

### <Example 3>

FIG. 7 is a schematic cross-sectional view illustrating a state on a winding start end side of a negative electrode and a positive electrode before winding in Example 3. In Example 3, the first insulating tape 52a was disposed on the outer peripheral-side exposed portion 48a and the negative electrode mixture layer 50 in the outer peripheral-side non-facing section 44 of the negative electrode 12, and the second insulating tape 52b was disposed on the inner peripheral-side exposed portion 48b and the negative electrode mixture layer 50 in the inner peripheral-side non-facing section 46 of the negative electrode 12. A state where the first insulating tape 52a is disposed on the outer peripheral-side non-facing section 44 is similar to that in Example 1. On the other hand, the second insulating tape 52b disposed on the inner peripheral-side non-facing section 46 of the negative electrode 12 is disposed over 2.1 turns in the circumferential direction of the inner peripheral-side non-facing section 46 when the negative electrode 12 is wound (the number of turns of the disposed insulating tape: 2.1 turns). In addition, the second insulating tape 52b disposed on the inner peripheral-side non-facing section 46 overlaps the inner peripheral-side non-facing section 46 at an area ratio of 97%, and overlaps the inner peripheral-side exposed portion 48b in the inner peripheral-side non-facing section 46 at an area ratio of 100%. A non-aqueous electrolyte secondary battery was produced in the same manner as in Example 1 except that the above negative electrode was used.

### <Comparative Example 1>

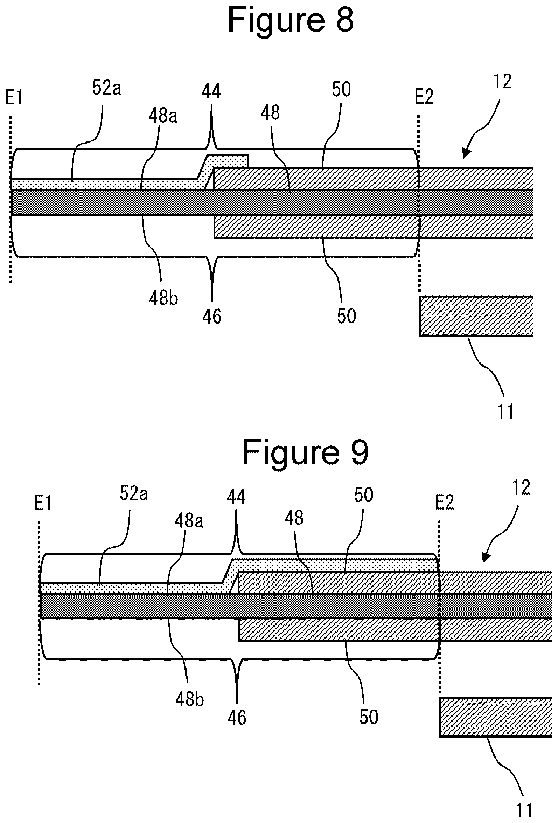

FIG. 8 is a schematic cross-sectional view illustrating a state on a winding start end side of a negative electrode and a positive electrode before winding in Comparative Example 1. In Comparative Example 1, the first insulating tape 52a was disposed on the outer peripheral-side exposed portion 48a and the negative electrode mixture layer 50 in the outer peripheral-side non-facing section 44 of the negative electrode 12. The first insulating tape 52a disposed on the outer peripheral-side non-facing section 44 of the negative electrode 12 is disposed over 1.0 turn in the circumferential direction of the outer peripheral-side non-facing section 44 when the negative electrode 12 is wound (the number of turns of the disposed insulating tape: 1.0 turn). In addition, the first insulating tape 52a disposed on the outer peripheral-side non-facing section 44 overlaps the outer peripheral-side exposed portion 48a in the outer peripheral-side non-facing section 44 at an area ratio of 100%, and overlaps the negative electrode mixture layer 50 in the outer peripheral-side non-facing section 44 at an area ratio of 13%. A non-aqueous electrolyte secondary battery was produced in the same manner as in Example 1 except that the above negative electrode was used.

### <Comparative Example 2>

FIG. 9 is a schematic cross-sectional view illustrating a state on a winding start end side of a negative electrode and a positive electrode before winding in Comparative Example 2. In Comparative Example 2, the first insulating tape 52a was disposed on the outer peripheral-side exposed portion 48a and the negative electrode mixture layer 50 in the outer peripheral-side non-facing section 44 of the negative electrode 12. A state where the first insulating tape 52a is disposed on the outer peripheral-side non-facing section 44 is similar to that in Example 1. A non-aqueous electrolyte secondary battery was produced in the same manner as in Example 1 except that the above negative electrode was used.

### <Comparative Example 3>

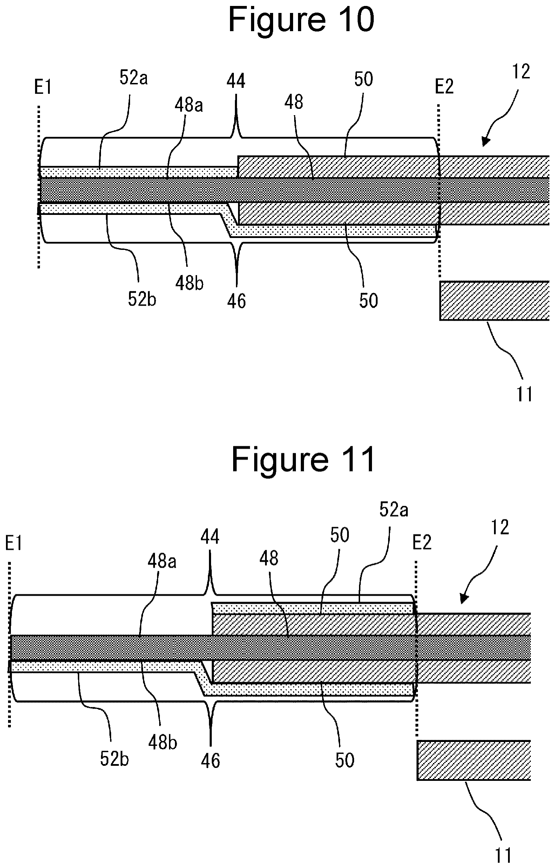

FIG. 10 is a schematic cross-sectional view illustrating a state on a winding start end side of a negative electrode and a positive electrode before winding in Comparative Example 3. In Comparative Example 3, the first insulating tape 52a was disposed on the outer peripheral-side exposed portion 48a in the outer peripheral-side non-facing section 44 of the negative electrode 12, and the second insulating tape 52b was disposed on the inner peripheral-side exposed portion 48b and the negative electrode mixture layer 50 in the inner peripheral-side non-facing section 46 of the negative electrode 12. The first insulating tape 52a disposed on the outer peripheral-side non-facing section 44 is disposed over 1.2 turns in the circumferential direction of the outer peripheral-side non-facing section 44 when the negative electrode 12 is wound (the number of turns of the disposed insulating tape: 1.2 turns). In addition, the first insulating tape 52a disposed on the outer peripheral-side non-facing section 44 overlaps the outer peripheral-side exposed portion 48a in the outer peripheral-side non-facing section 44 at an area ratio of 100%, and overlaps the negative electrode mixture layer 50 in the outer peripheral-side non-facing section 44 at an area ratio of 0%. On the other hand, the second insulating tape 52b disposed on the inner peripheral-side non-facing section 46 of the negative electrode 12 is disposed over 2.1 turns in the circumferential direction of the inner peripheral-side non-facing section 46 when the negative electrode 12 is wound (the number of turns of the disposed insulating tape: 2.1 turns). In addition, the second insulating tape 52b disposed on the inner peripheral-side non-facing section 46 overlaps the inner peripheral-side non-facing section 46 at an area ratio of 97%, and overlaps the inner peripheral-side exposed portion 48b in the inner peripheral-side non-facing section 46 at an area ratio of 100%.

### <Comparative Example 4>

FIG. 11 is a schematic cross-sectional view illustrating a state on a winding start end side of a negative electrode and a positive electrode before winding in Comparative Example 4. In Comparative Example 4, the first insulating tape 52a was disposed on the negative electrode mixture layer 50 in the outer peripheral-side non-facing section 44 of the negative electrode 12, and the second insulating tape 52b was disposed on the inner peripheral-side exposed portion 48b and the negative electrode mixture layer 50 in the inner peripheral-side non-facing section 46 of the negative electrode 12. The first insulating tape 52a disposed on the outer peripheral-side non-facing section 44 is disposed over 0.9 turns in the circumferential direction of the outer peripheral-side non-facing section 44 when the negative electrode 12 is wound (the number of turns of the disposed insulating tape: 0.9 turns). In addition, the first insulating tape 52a disposed on the outer peripheral-side non-facing section 44 overlaps the outer peripheral-side exposed portion 48a in the outer peripheral-side non-facing section 44 at an area ratio of 0%, and overlaps the negative electrode mixture layer 50 in the outer peripheral-side non-facing section 44 at an area ratio of 94%. On the other hand, the second insulating tape 52b disposed on the inner peripheral-side non-facing section 46 of the negative electrode 12 is disposed over 2.1 turns in the circumferential direction of the inner peripheral-side non-facing section 46 when the negative electrode 12 is wound (the number of turns of the disposed insulating tape: 2.1 turns). In addition, the second insulating tape 52b disposed on the inner peripheral-side non-facing section 46 overlaps the inner peripheral-side non-facing section 46 at an area ratio of 97%, and overlaps the inner peripheral-side exposed portion 48b in the inner peripheral-side non-facing section 46 at an area ratio of 100%.

### [Evaluation of Electrode Plate Deformation]

The non-aqueous electrolyte secondary batteries of Examples and Comparative Examples were charged at a constant current of 0.3 It until a battery voltage reached 4.2 V, and then charged at a constant voltage of 4.2 V until a current reached 0.02 It. Thereafter, discharging was performed at a constant current of 1.0 It until the battery voltage reached 2.7 V. The non-aqueous electrolyte secondary batteries were subjected to sectional observation near the center of the electrode assembly using an X-ray CT apparatus (SMX-225CT FPD HR manufactured by Shimadzu Corporation) to confirm the presence or absence of occurrence of electrode plate deformation. The results are summarized in Table 1.

**[Table 1]**

| | Negative electrode | | | | | | Evaluation |
|---|---|---|---|---|---|---|---|
| | Insulating tape disposed on outer peripheral-side non-facing section | | | Insulating tape disposed on inner peripheral-side non-facing section | | | Presence or absence of electrode plate deformation |
| | Area ratio of overlap with negative electrode mixture layer | Area ratio of overlap with outer peripheral-side exposed portion | Number of turns | Area ratio of overlap with inner peripheral-side non-facing section | Area ratio of overlap with inner peripheral-side exposed portion | Number of turns | |
| | % | % | Turns | % | % | Turns | |
| Example 1 | 94 | 100 | 2.1 | 50 | 0 | 0.9 | Absent |
| Example 2 | 94 | 100 | 2.1 | 53 | 100 | 1.2 | Absent |
| Example 3 | 94 | 100 | 2.1 | 97 | 100 | 2.1 | Absent |
| Comparative Example 1 | 13 | 100 | 1.0 | 0 | 0 | 0 | Present |
| Comparative Example 2 | 94 | 100 | 2.1 | 0 | 0 | 0 | Present |
| Comparative Example 3 | 0 | 100 | 1.2 | 97 | 100 | 2.1 | Present |
| Comparative Example 4 | 94 | 0 | 0.9 | 97 | 100 | 2.1 | Present |

The electrode plate deformation was confirmed in Comparative Examples 1 to 4, but the electrode plate deformation was not confirmed in Examples 1 to 3. From the results, it can be said that the occurrence of the electrode plate deformation caused by charging and discharging can be suppressed by disposing the first insulating tape on the outer peripheral-side non-facing section over greater than or equal to 1.5 turns in the circumferential direction of the outer peripheral-side non-facing section of the negative electrode and disposing the second insulating tape on the inner peripheral-side non-facing section over greater than or equal to 0.9 turns in the circumferential direction of the inner peripheral-side non-facing section of the negative electrode as in Examples.

### [Supplementary Notes]

(1) A secondary battery including an electrode assembly in which a positive electrode and a negative electrode having a negative electrode mixture layer disposed on a negative electrode core are wound with a separator interposed therebetween,
   wherein the negative electrode has, at a winding start-side end, an outer peripheral-side non-facing section and an inner peripheral-side non-facing section that do not face the positive electrode across the separator, the negative electrode having a first insulating tape disposed on the outer peripheral-side non-facing section and a second insulating tape disposed on the inner peripheral-side non-facing section,
   the first insulating tape is disposed on the outer peripheral-side non-facing section over greater than or equal to 1.5 turns in a circumferential direction of the outer peripheral-side non-facing section, and
   the second insulating tape is disposed on the inner peripheral-side non-facing section over greater than or equal to 0.9 turns in a circumferential direction of the inner peripheral-side non-facing section.
(2) The secondary battery according to (1), wherein the first insulating tape is disposed on the outer peripheral-side non-facing section over greater than or equal to 1.5 turns and less than or equal to 3 turns in the circumferential direction of the outer peripheral-side non-facing section.
(3) The secondary battery according to (1) or (2), wherein the first insulating tape overlaps the negative electrode mixture layer in the outer peripheral-side non-facing section at an area ratio of greater than or equal to 80% and less than or equal to 100%.
(4) The secondary battery according to any one of (1) to (3), wherein
   the outer peripheral-side non-facing section includes an outer peripheral-side exposed portion where the negative electrode mixture layer is not formed on the negative electrode core, and
   the first insulating tape is disposed on the outer peripheral-side exposed portion.
(5) The secondary battery according to any one of (1) to (4), wherein the second insulating tape overlaps the inner peripheral-side non-facing section at an area ratio of greater than or equal to 50% and less than or equal to 100%.
(6) The secondary battery according to any one of (1) to (5), wherein the second insulating tape is disposed on the negative electrode mixture layer in the inner peripheral-side non-facing section.
(7) The secondary battery according to any one of (1) to (6), wherein
   the inner peripheral-side non-facing section includes an inner peripheral-side exposed portion where the negative electrode mixture layer is not formed on the negative electrode core, and
   the second insulating tape is disposed on the inner peripheral-side exposed portion.
(8) The secondary battery according to any one of (1) to (7), wherein
   the inner peripheral-side non-facing section includes an inner peripheral-side exposed portion where the negative electrode mixture layer is not formed on the negative electrode core, and
   the second insulating tape is disposed on the negative electrode mixture layer and the inner peripheral-side exposed portion in the inner peripheral-side non-facing section.
(9) The secondary battery according to any one of (1) to (8), wherein the first insulating tape is disposed on the outer peripheral-side non-facing section from a circumferential inner edge of the outer peripheral-side non-facing section.
(10) The secondary battery according to any one of (1) to (9), wherein the second insulating tape is disposed on the inner peripheral-side non-facing section from a circumferential inner edge of the inner peripheral-side non-facing section.
(11) The secondary battery according to any one of (1) to (10), wherein the first insulating tape has a laminated structure in which an adhesive layer and a base material layer are laminated in this order from the outer peripheral-side non-facing section side, and the second insulating tape has a laminated structure in which an adhesive layer and a base material layer are laminated in this order from the inner peripheral-side non-facing section side.
(12) The secondary battery according to (11), wherein the base material layer contains polypropylene.
(13) The secondary battery according to any one of (1) to (12), wherein the first insulating tape and the second insulating tape each have a thickness of greater than or equal to 0.02 mm and less than or equal to 0.1 mm.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18a, 18b: Insulating plate
- 19: Positive electrode lead
- 20a, 20b: Negative electrode lead
- 21: Projecting portion
- 22: Filter
- 23: Lower vent member
- 24: Insulator
- 25: Upper vent member
- 26: Cap
- 27: Gasket
- 40: Non-facing section
- 42: Facing section
- 44: Outer peripheral-side non-facing section
- 44a, 46a: Circumferential inner edge
- 46: Inner peripheral-side non-facing section
- 48: Negative electrode core
- 48a: Outer peripheral-side exposed portion
- 48b: Inner peripheral-side exposed portion
- 50: Negative electrode mixture layer
- 52: Insulating tape
- 52a: First insulating tape
- 52b: Second insulating tape
- 54: Base material layer
- 56: Adhesive layer.

## Claims

1. A secondary battery comprising an electrode assembly in which a positive electrode and a negative electrode having a negative electrode mixture layer disposed on a negative electrode core are wound with a separator interposed between the positive electrode and the negative electrode,
wherein the negative electrode has, at a winding start-side end, an outer peripheral-side non-facing section and an inner peripheral-side non-facing section that do not face the positive electrode across the separator, the negative electrode having a first insulating tape disposed on the outer peripheral-side non-facing section and a second insulating tape disposed on the inner peripheral-side non-facing section,
the first insulating tape is disposed on the outer peripheral-side non-facing section over greater than or equal to 1.5 turns in a circumferential direction of the outer peripheral-side non-facing section, and
the second insulating tape is disposed on the inner peripheral-side non-facing section over greater than or equal to 0.9 turns in a circumferential direction of the inner peripheral-side non-facing section.

2. The secondary battery according to claim 1, wherein the first insulating tape is disposed on the outer peripheral-side non-facing section over greater than or equal to 1.5 turns and less than or equal to 3 turns in the circumferential direction of the outer peripheral-side non-facing section.

3. The secondary battery according to claim 1 or 2, wherein the first insulating tape overlaps the negative electrode mixture layer in the outer peripheral-side non-facing section at an area ratio of greater than or equal to 80% and less than or equal to 100%.

4. The secondary battery according to claim 1 or 2, wherein
the outer peripheral-side non-facing section includes an outer peripheral-side exposed portion where the negative electrode mixture layer is not formed on the negative electrode core, and
the first insulating tape is disposed on the outer peripheral-side exposed portion.

5. The secondary battery according to claim 1 or 2, wherein the second insulating tape overlaps the inner peripheral-side non-facing section at an area ratio of greater than or equal to 50% and less than or equal to 100%.

6. The secondary battery according to claim 1 or 2, wherein the second insulating tape is disposed on the negative electrode mixture layer in the inner peripheral-side non-facing section.

7. The secondary battery according to claim 1 or 2, wherein
the inner peripheral-side non-facing section includes an inner peripheral-side exposed portion where the negative electrode mixture layer is not formed on the negative electrode core, and
the second insulating tape is disposed on the inner peripheral-side exposed portion.

8. The secondary battery according to claim 1 or 2, wherein
the inner peripheral-side non-facing section includes an inner peripheral-side exposed portion where the negative electrode mixture layer is not formed on the negative electrode core, and
the second insulating tape is disposed on the negative electrode mixture layer and the inner peripheral-side exposed portion in the inner peripheral-side non-facing section.

9. The secondary battery according to claim 1 or 2, wherein the first insulating tape is disposed on the outer peripheral-side non-facing section from a circumferential inner edge of the outer peripheral-side non-facing section.

10. The secondary battery according to claim 1 or 2, wherein the second insulating tape is disposed on the inner peripheral-side non-facing section from a circumferential inner edge of the inner peripheral-side non-facing section.

11. The secondary battery according to claim 1 or 2, wherein the first insulating tape has a laminated structure in which an adhesive layer and a base material layer are laminated in order from the outer peripheral-side non-facing section side, and the second insulating tape has a laminated structure in which an adhesive layer and a base material layer are laminated in order from the inner peripheral-side non-facing section side.

12. The secondary battery according to claim 11, wherein the base material layer contains polypropylene.

13. The secondary battery according to claim 1 or 2, wherein the first insulating tape and the second insulating tape each have a thickness of greater than or equal to 0.02 mm and less than or equal to 0.1 mm.
